(19) Europäisches Patentamt
European Patent Office
Office européen des brevets

(11) Publication number: **0 398 606 A2**

(12) # EUROPEAN PATENT APPLICATION

(21) Application number: **90305143.1**

(51) Int. Cl.5: **C09K 19/42, G02F 1/13**

(22) Date of filing: **14.05.90**

(30) Priority: **17.05.89 JP 123818/89**

(43) Date of publication of application: **22.11.90 Bulletin 90/47**

(84) Designated Contracting States: **DE FR GB**

(71) Applicant: **SEIKO EPSON CORPORATION**
**4-1, Nishishinjuku 2-chome**
**Shinjuku-ku Tokyo(JP)**

(72) Inventor: **Iijima, Chiyoaki, c/o SEIKO EPSON CORPORATION**
**3-5 Owa 3-chome, Suwa-shi**
**Nagano-ken(JP)**

(74) Representative: **Caro, William Egerton et al**
**J. MILLER & CO. Lincoln House 296-302 High Holborn**
**London WC1V 7JH(GB)**

(54) **Liquid crystal display device.**

(57) A liquid crystal display devices comprises a liquid crystal cell (2) containing a nematic liquid crystal composition (6) disposed between a pair of electrode plates (3, 4) with a twist angle in the range of 180° to 360°, the electrode plates being spaced apart by between 2 µm and 5.5 µm. A pair of light polarising plates (8, 9) sandwich the liquid crystal cell. The liquid crystal composition (6) comprises between 5 and 40 weight percent of at least one compound with a terminal -CN radical and/or at least one compound with a terminal -F radical.

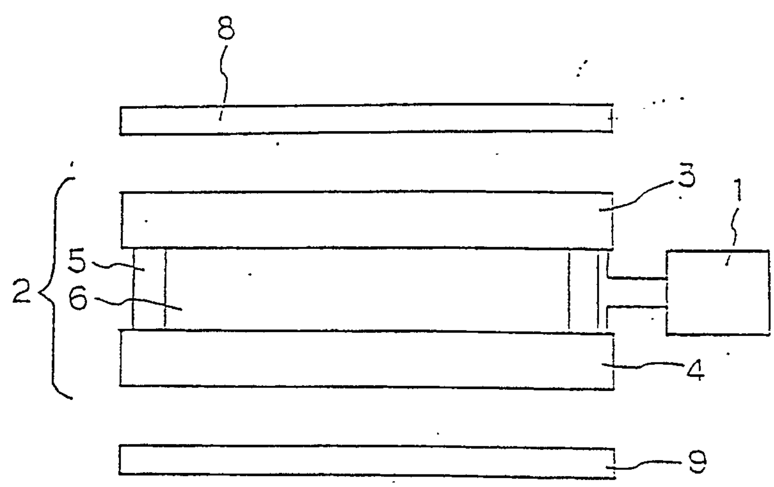


FIG. 1

EP 0 398 606 A2

# LIQUID CRYSTAL DISPLAY DEVICE

This invention relates to liquid crystal display devices.

In general, conventional super twisted nematic (STN) type liquid crystal display devices have such a slow response time that they may not be applicable to personal computers with a mouse. The relation between response time t, viscosity $\eta$ , and thickness d of a liquid crystal layer of such a liquid crystal display device is given by:

$t \propto \eta d^2$

This indicates that, as the thickness d of the liquid crystal layer is reduced the response time is also reduced, i.e. the liquid crystal display device reacts more quickly. To achieve a response time of 150 ms or less when driven at a duty ratio of 1/200, d should be 5.5 µm or less. To achieve a response time of 100 ms or less, d should be 4 µm or less.

However, as the thickness d of the liquid crystal layer is reduced, irregularity (referred to as "cross talk") resulting from different contrasts in a non-selective mode conspicuously appears along scan electrode lines and signal electrode lines of the liquid crystal display device.

As a result of researching this problem, the present inventors have found that the cause lies in increase of capacitance of the liquid crystal layer. That is, the cause of cross talk is rounding of the voltage waveform applied to the liquid crystal layer and spike-shaped noise. Cross talk is the phenomenon whereby, when an image is displayed by a liquid crystal display device, not only are selected pixels but also adjacent non-selected pixels are displayed giving rise to a deterioration in contrast. The degree of cross talk depends on the scale of rounding or noise. As the capacitance of the liquid crystal layer is increased, the rounding and noise also increases. Moreover, the capacitance of the liquid crystal layer increases as the thickness of the liquid crystal layer is reduced. That is, as the response time is reduced, the capacitance of the liquid crystal layer is increased, resulting in an increase in the degree of cross talk.

The present invention seeks to provide a quick responding STN type liquid crystal display device which has little or no degree of cross talk, which is clear and which provides no jitter of the display produced.

According to the present invention there is provided a liquid crystal display device comprising: a liquid crystal cell containing a nematic liquid crystal composition disposed between a pair of electrode plates with a twist angle in the range of 180° to 360°, the electrode plates being spaced apart by between 2 µm and 5.5 µm; and a pair of light polarising plates between which the liquid crystal cell is sandwiched characterised in that the liquid crystal composition comprises between 5 and 40 weight percent of at least one compound with a terminal -CN radical and/or at least one compound with a terminal -F radical.

Preferably the nematic liquid crystal material has 10 weight percent or less or one or more compounds containing a

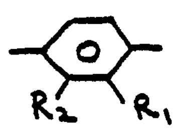

radical where $R_1$ is -CN or -F and $R_2$ is -H, -CN or -F.

The nematic liquid crystal composition may contain between 20 and 60 weight percent of at least one compound containing a

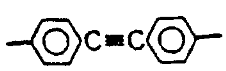

group.

The invention is illustrated, merely by way of example, in the accompanying drawings, in which:-

Figure 1 is a schematic view of a liquid crystal display device according to the present invention;

Figures 2 to 4 illustrate patterns displayed by the liquid crystal display device to ascertain the degree of cross talk; and

Figure 5 illustrates graphically the problem of jitter of the display of a liquid crystal display device.

Figure 1 is a schematic view of a liquid crystal display device according to the present invention. A driving circuit 1 serves to provide a time divisional or multiplex signal to drive a liquid crystal cell 2. The

liquid crystal cell 2 includes an upper electrode plate 3 and a lower electrode plate 4 spaced apart by a spacer 5 with a layer 6 of a liquid crystal composition therebetween. The liquid crystal cell 2 is sandwiched between an upper light polarising plate 8 and a lower light polarising plate 9. An optical anisotropic material (not shown) may be disposed between the upper light polarising plate 8 and the upper electrode plate 3.

The ascertain the degree of cross talk, the patterns shown in Figures 2, 3 and 4 are displayed by the liquid crystal display device. The differenced ΔT(%) of transmittance between a point a and a point b in each Figure is checked. As the difference ΔT is increased, the degree of cross talk increases.

The present invention will be illustrated further with reference to the following Examples.

## EXAMPLE 1

A conventional liquid crystal composition is as shown in Table 1.

Table 1

| Compound | Composition Ratio (wt%) | |
|---|---|---|
| 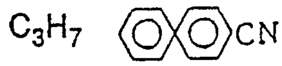 | 10 | |
| 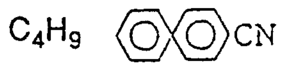 | 10 | |
| 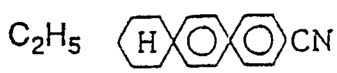 | 10 | |
| 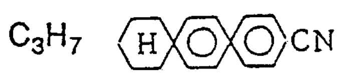 | 10 | 60 |
| 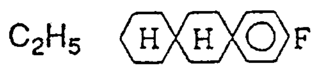 | 8 | |
| 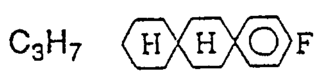 | 8 | |
| 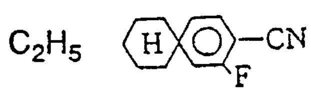 | 4 | |
| 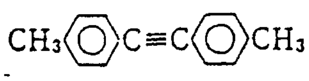 | 15 | |
| 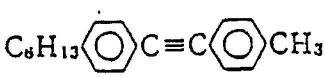 | 10 | 40 |
| 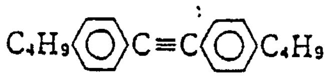 | 15 | |

## EXAMPLE 2

A conventional liquid crystal composition is as shown in Table 2.

| Compound | Composition Ratio (wt%) | |
|---|---|---|
| 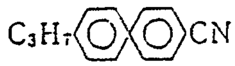 | 10 | |
| 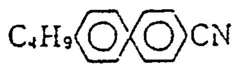 | 10 | |
| 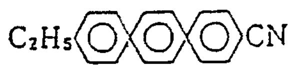 | 10 | 52 |
| 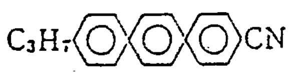 | 10 | |
| 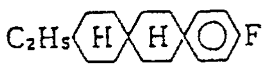 | 8 | |
| 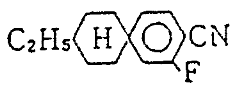 | 4 | |
| 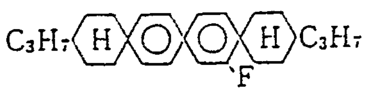 | 5 | 14 |
| 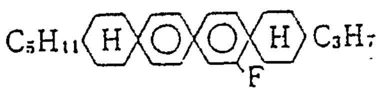 | 5 | |
| 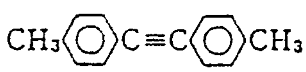 | 15 | |
| 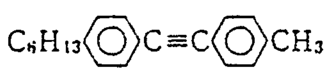 | 8 | 38 |
| 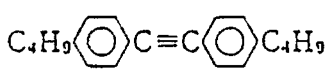 | 15 | |

## EXAMPLE 3

A liquid crystal composition of a liquid crystal display device according to the present invention is as shown in Table 3, this being a variation of the conventional liquid crystal composition of Example 1.

Table 3

| Compound | Composition Ratio (wt%) | |
|---|---|---|
| 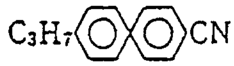 | 8 | |
| 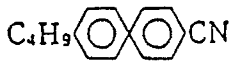 | 8 | |
| 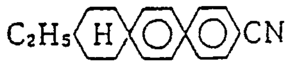 | 8 | 35 |
| 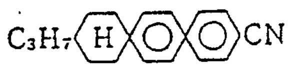 | 8 | |
| 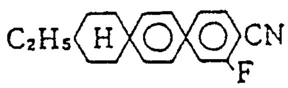 | 3 | |
| 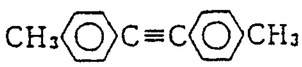 | 15 | |
| 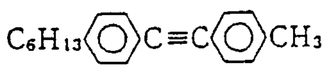 | 15 | 45 |
| 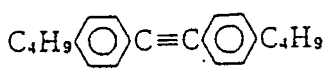 | 15 | |
| 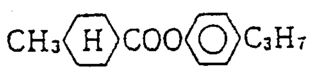 | 10 | |
| 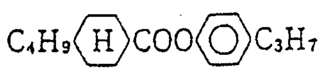 | 10 | |

EXAMPLE 4

A liquid crystal composition of a liquid crystal display device according to the present invention is as shown in Table 4.

Table 4

| Compound | Composition Ratio (wt%) | |
|---|---|---|
| 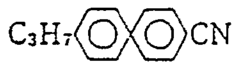 | 10 | |
| 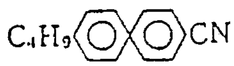 | 10 | 23 |
| 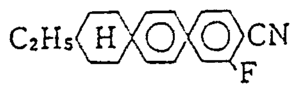 | 3 | |
| 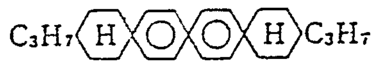 | 6 | |
| 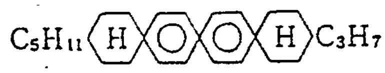 | 6 | |
| 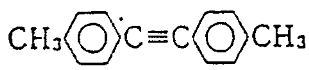 | 15 | |
| 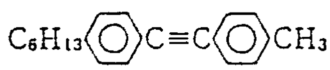 | 15 | 45 |
| 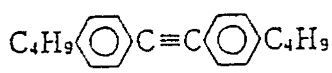 | 15 | |
| 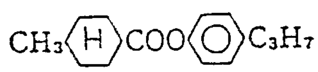 | 10 | |
| 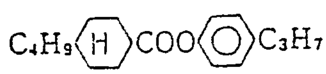 | 10 | |

EXAMPLE 5

A liquid crystal composition of a liquid crystal display device according to the present invention is as shown in Table 5.

Table 5

| Compound | Composition Ratio (wt%) | |
|---|---|---|
| 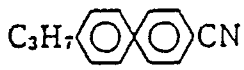 | 3 | 7 |
| 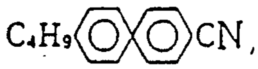 | 3 | |
| 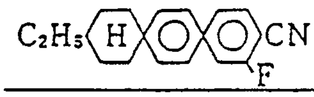 | 1 | |
| 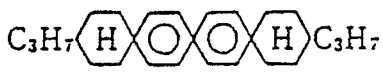 | 10 | |
| 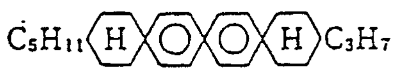 | 9 | |
| 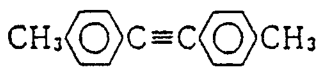 | 20 | 50 |
| 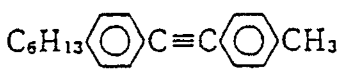 | 15 | |
| 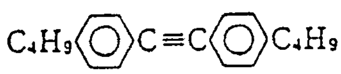 | 15 | |
| 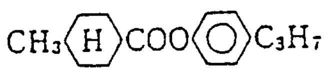 | 12 | |
| 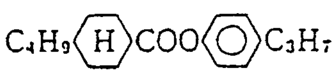 | 12 | |

EXAMPLE 6

A liquid crystal composition of a liquid crystal display device according to the present invention is as shown in Table 6.

Table 6

| Compound | Composition ratio (wt%) | |
|---|---|---|
| 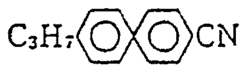 | 10 | |
| 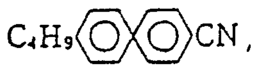 | 7 | |
| 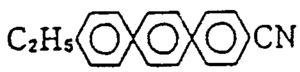 | 7 | |
| 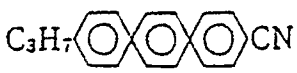 | 7 | 34 |
| 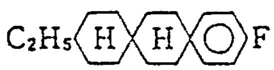 | 3 | |
| 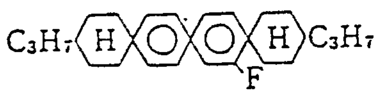 | 3 | 6 |
| 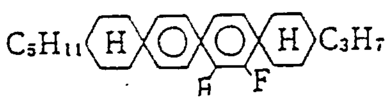 | 3 | |
| 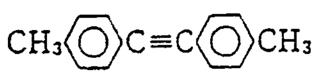 | 15 | |
| 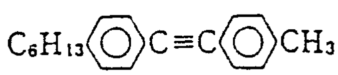 | 15 | 45 |
| 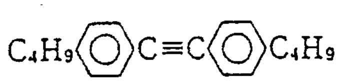 | 15 | |
| 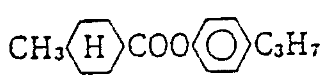 | 8 | |
| 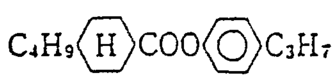 | 7 | |

Example 7

A liquid crystal composition of a liquid crystal display device according to the present invention is as shown in Table 7.

Table 7

| Compound | Composition Ratio (wt%) | |
|---|---|---|
| 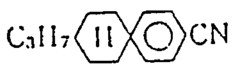 | 3 | 6 |
| 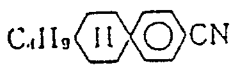 | 3 | |
| 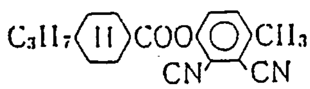 | 8 | |
| 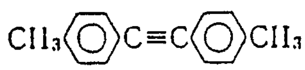 | 15 | 45 |
| 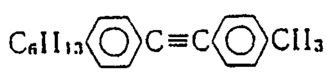 | 15 | |
| 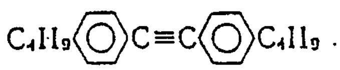 | 15 | |
| 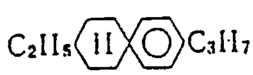 | 15 | |
| 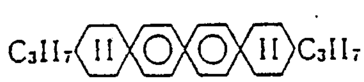 | 6 | |
| 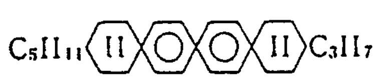 | 6 | |
| 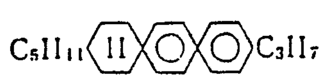 | 14 | |

Assuming that an optical activator (for example S-811, Melk Company) is added to the liquid crystal compositions of the Examples, the liquid crystal composition has a twist angle of 240°. It is also assumed that the liquid crystal display device is driven with a duty ratio of 1/200. In Table 8 d represents the thickness of the layer 6 of the liquid crystal composition, C represents the capacitance per unit area of the liquid crystal composition, CR represents contrast ratio, t represents response time, $\Delta T_1$ represents the difference of transmittance with the pattern shown in Figure 2, $\Delta T_2$ represents difference of transmittance with the pattern shown in Figure 3, and $\Delta T_3$ represents the difference of transmittance with the pattern shown in Figure 4. The upper and lower polarising plates 8, 9 each have an absorption axis shifted by 45° with respect to the rubbing or alignment direction of each adjacent electrode plate 3, 4.

Table 8

| | d | C | C.R | t | $\Delta T_1$ | $\Delta T_2$ | $\Delta T_3$ |
|---|---|---|---|---|---|---|---|
| | [$\mu$m] | [nF/cm$^2$] | | [ms] | [%] | [%] | [%] |
| EXAMPLE 3 | 4.1 | 0.8 | 9 | 130 | 3.0 | 45.5 | 6.5 |
| EXAMPLE 4 | 3.9 | 0.8 | 11 | 100 | 3.0 | 43.2 | 6.3 |
| EXAMPLE 5 | 4.3 | 0.6 | 11 | 90 | 2.8 | 38.8 | 6.0 |
| EXAMPLE 6 | 3.8 | 0.9 | 11 | 110 | 3.0 | 46.2 | 6.2 |
| EXAMPLE 7 | 3.8 | 0.8 | 12 | 100 | 3.0 | 44.9 | 6.5 |
| EXAMPLE 1 | 4.3 | 1.3 | 9 | 120 | 3.1 | 55.2 | 8.3 |
| EXAMPLE 2 | 4.1 | 1.5 | 12 | 150 | 3.1 | 60.2 | 7.2 |

As will be clear from Table 8, the liquid crystal compositions of Examples 3 to 7 offer relatively small capacitance and excellent reduction in the degree of cobwebbing. Especially, Example 5 greatly reduces $\Delta T_2$. If the liquid crystal composition includes a compound with one of the following groups,

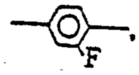, 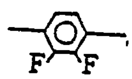, 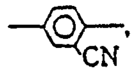, 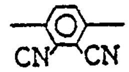

the contrast is improved as shown in Example 2, but there is a relatively high degree of cobwebbing. However, in Example 7 which discloses a liquid crystal composition which contains less than 10% by weight of compounds with a terminal -CN radical, there is improved contrast and excellent reduction in the degree of cobwebbing.

The characteristics of the liquid crystal composition of Examples 1 and 5 were determined when the layer 6 of the liquid crystal composition had a thickness of 3 $\mu$m. Table 9 shows the result of this determination. The product of optical anisotropy $\Delta n$ and the liquid crystal thickness $\underline{d}$ was approximately 0.6 and the upper and lower polarising plates 8, 9 had their absorption axes crossed at right angles.

Table 9

| | d | C | C.R | t | $\Delta T_1$ | $\Delta T_2$ | $\Delta T_3$ |
|---|---|---|---|---|---|---|---|
| | [$\mu$m] | [nF/cm$^2$] | | [ms] | [%] | [%] | [%] |
| EXAMPLE 5 | 3.0 | 0.8 | 7 | 50 | 3.0 | 46.5 | 6.1 |
| EXAMPLE 1 | 3.0 | 1.9 | 7 | 60 | 3.2 | 82.4 | 8.3 |

As is clear from Table 9, the liquid crystal composition of Example 5 can offer a response speed of 50 ms which is twice as fast as the case shown in Table 8 where the thickness was 4.3 $\mu$m, though it provides the same low degree of cross talk.

The characteristics of the liquid crystal compositions of Examples 1 and 3 were determined when the layer 6 of the liquid crystal composition had a thickness of 3.4 $\mu$m and the liquid crystal display device was driven with a driving ratio of 1/400. Two phase difference films were held between the upper light polarising plate 8 and the upper electrode plate 3. These two films are optically anisotropic and are so arranged that their optical axes cross each other at an angle of 30° and result in a monochromatic display. Table 10 shows the result of this determination.

Table 10

| | d | C | C.R | t | $\Delta T_1$ | $\Delta T_2$ | $\Delta T_3$ |
|---|---|---|---|---|---|---|---|
| | [$\mu$m] | [nF/cm$^2$] | | [ms] | [%] | [%] | [%] |
| EXAMPLE 5 | 3.4 | 0.9 | 10 | 70 | 3.5 | 53.2 | 7.1 |
| EXAMPLE 1 | 3.4 | 2.2 | 10 | 80 | 3.9 | 95.2 | 9.5 |

As is clear from Table 10, the liquid crystal composition of Example 5 offers an excellent reduction in the degree of cross talk compared to the conventional liquid crystal composition of Example 1. Further, the liquid crystal display device with the liquid crystal composition of Example 5 was provided with red, green and blue colour filters for achieving multi-colour display.

It is believed that the results of reduction in the degree of cross talk will also be achieved by an STN type liquid crystal display device in which the twist angle is in the range of 180° to 360°.

Jitter of the display of a liquid crystal display device according to the present invention can also be reduced. The term "jitter" means flickering or scrolling of the display. When a voltage with a waveform as shown in Figure 5 (a) is applied, the light transmitted through the liquid crystal cell 2 is as shown in Figure 5 (b). The initial application of the voltage waveform shown in Figure 5 (a) causes the light transmitted through the liquid crystal cell 2 to change rapidly and this results in jitter of the display produced. To reduce this jitter, it is necessary to reduce $\Delta H$ (shown in Figure 5 (b)) to a small value. Table 11 shows the value of $\Delta H$ with the liquid crystal compositions of Examples 1, 4 and 5 in the case where the twist angle is 240°.

Table 11

| | d [$\mu$m] | $\Delta H$ [%] |
|---|---|---|
| EXAMPLE 4 | 3.9 | 7.0 |
| EXAMPLE 5 | 4.3 | 6.5 |
| EXAMPLE 1 | 4.3 | 8.5 |

As is clear from Table 11 the liquid crystal compositions of Examples 4 and 5 offer a clear display with relatively small jitter in comparison with the conventional liquid crystal composition of Example 1.

As will be appreciated from the foregoing, a STN type liquid crystal display, device according to the present invention with the thickness of the layer of the liquid crystal composition between 2 $\mu$m to 5.5 $\mu$m has a response time of 200 ms or less and offers a reduced degree of cobwebbing and less jitter of the display.

## Claims

1. A liquid crystal display device comprising: a liquid crystal cell (2) containing a nematic liquid crystal composition (6) disposed between a pair of electrode plates (3, 4) with a twist angle in the range of 180° to 360°, the electrode plates being spaced apart by between 2 $\mu$m and 5.5 $\mu$m; and a pair of light polarising plates (8, 9) between which the liquid crystal cell is sandwiched characterised in that the liquid crystal composition (6) comprises between 5 and 40 weight percent of at least one compound with a terminal -CN radical and/or at least one compound with a terminal -F radical.

2. A liquid crystal display device as claimed in claim 1 characterised in that the nematic liquid crystal material has 10 weight percent or less or one or more compounds containing a

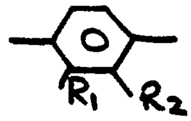

radical where $R_1$ is -CN or - F and $R_2$ is -H, -CN or -F.

3. A liquid crystal display device as claimed in claim 1 or 2 characterised in that the nematic liquid crystal composition contains between 20 and 60 weight percent of at least one compound containing a

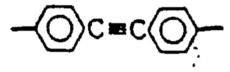

group.

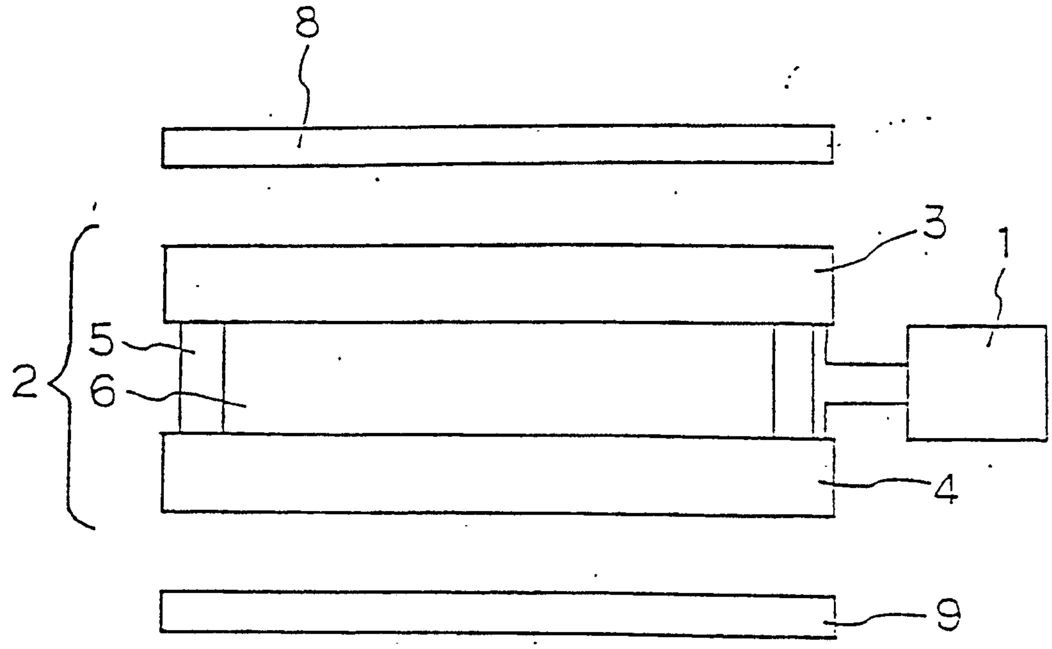


FIG. 1

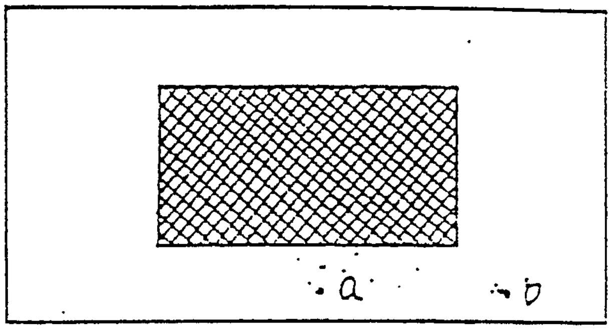


FIG. 2

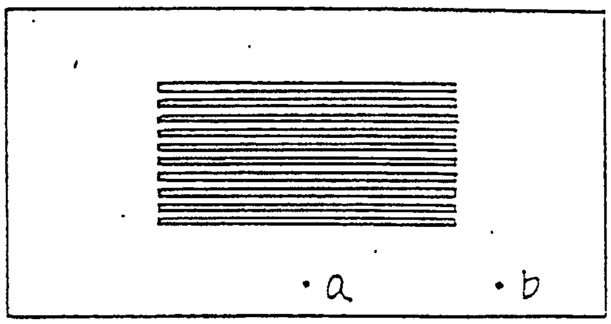


FIG. 3

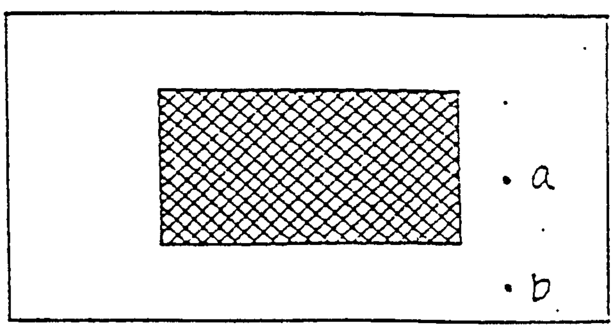


FIG. 4

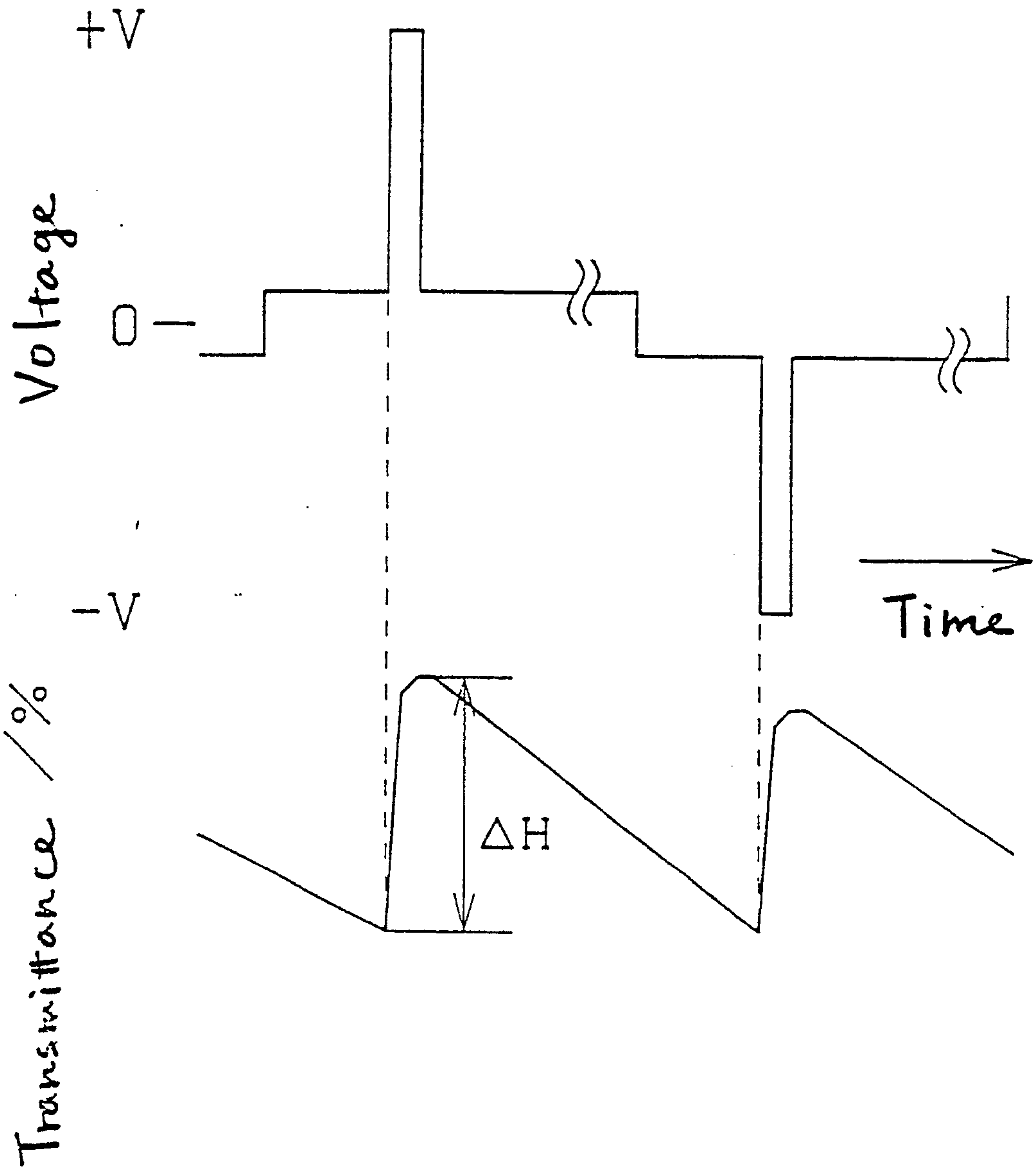


FIG. 5